# EUROPÄISCHE PATENTANMELDUNG

(11) **EP 2 732 964 A1**
(43) Veröffentlichungstag der Anmeldung: **21.05.2014**
(21) Anmeldenummer: 13005424.0
(22) Anmeldetag: 19.11.2013
(51) Int. Cl.: B32B 5/02, B32B 21/08, B32B 27/12

(54) **Platte mit außenseitiger Nutzschicht und Verfahren zur Herstellung einer Platte**

(30) Priorität: 19.11.2012 DE 102012022490; 04.11.2013 EP 13005185
(71) Anmelder: hülsta-werke Hüls GmbH & Co. KG, 48703 Stadtlohn (DE)
(72) Erfinder: Udo Tünte, DE - 46348 Raesfeld (DE)
(74) Vertreter: Von Rohr Patentanwälte Partnerschaft mbB

(57) **Zusammenfassung**

Dargestellt und beschrieben ist eine Platte (1, 5), wie Bodenbelags-, Wand- oder Deckenverkleidungsplatte und/oder als Möbelbauteil-, Gehäuse-, Abdeck- oder Trockenausbauplatte, und/oder als Fassaden-, Paneel- oder Dielenelement, Sichtblende oder dergleichen, mit einem Plattengrundkörper (2) und wenigstens einer auf den Plattengrundkörper (2) aufgebrachten Nutzschicht (3). Erfindungsgemäß ist vorgesehen, dass die Nutzschicht (3) als textile Nutzschicht (3) mit einem mehrschichtigen Aufbau ausgebildet und als vorgefertigte, einteilige Schichtkomponente auf dem Plattengrundkörper (2) befestigt ist.

## Beschreibung

Die Erfindung betrifft eine Platte, wie eine Bodenbelags-, Wand- oder Deckenverkleidungsplatte und/oder eine Möbelbauteil-, Gehäuse-, Abdeck- oder Trockenausbauplatte, und/oder als Fassaden-, Paneel- oder Dielenelement oder als Sichtblende, mit einem Plattengrundkörper und einer auf den Plattengrundkörper aufgebrachten vorzugsweise oberen, außenseitigen Nutzschicht. Darüber hinaus betrifft die vorliegende Erfindung ein Verfahren zur Herstellung einer Platte der vorgenannten Art.

Platten der eingangs genannten Art sind bereits aus dem Stand der Technik bekannt und werden in unterschiedlichen Anwendungsbereichen eingesetzt. Die bekannten Platten weisen üblicherweise einen Plattengrundkörper und eine auf den Plattengrundkörper aufgebrachte, außenseitige Nutzschicht auf. Der Plattengrundkörper fungiert als Tragschicht und muss als stützendes oder verbindendes Element Lasten aufnehmen und eine dauerhafte Dimensionsstabilität gewährleisten. Die Nutzschicht stellt die oberste Schicht.der Platte der, die entweder primär und unmittelbar einer Begehung durch Menschen bzw. einem Inkontakttreten mit anderen Objekten und einer damit verbundenen mechanischen Belastung ausgesetzt ist und/oder die als sichtbare Oberfläche eine Gestaltungsfunktion der Platte bei der Verkleidung oder Abdeckung oder deren Verwendung als Bauelement übernimmt. Nutzschichten können dazu vorgesehen sein, die Abrieb- oder Kratzfestigkeit der in Rede stehenden Platten gegenüber mechanischer Beanspruchung zu erhöhen. Darüber hinaus kann die Nutzschicht zum Schutz vor Durchfeuchtung des Plattengrundkörpers vorgesehen sein, was insbesondere für die Verwendung der Platte im Außenbereich von Vorteil ist. Dekorschichten können dem Plattengrundkörper das natürliche Aussehen von beliebigen Rohstoffen verleihen. Darüber hinaus können Nutzschichten dazu beitragen, dem Plattengrundkörper eine bestimmte Feuerfestigkeit und/oder ein bestimmtes Schadstoffabsorptionsvermögen zu verleihen.

Aus der WO 2005/066431 A2 ist bereits ein Laminatbodenpaneel bekannt, das eine Trägerplatte und eine Nutzschicht mit abriebfesten Partikeln zum Schutz vor Verschleiß aufweist. Dabei weist die Nutzschicht ein Dekorpapier oder eine elastische Dekorfolie auf, auf dem sich eine dekorative Abbildung befindet. Aufgabe der vorliegenden Erfindung ist es, eine Platte der oben bezeichneten Art mit einem Plattengrundkörper und einer auf den Plattengrundkörper aufgebrachten Nutzschicht zur Verfügung zu stellen, wobei sich die Platte durch einen einfachen und hoch belastbaren Aufbau sowie durch eine Nutzschicht mit einer gegenüber dem Stand der Technik erweiterten Funktionalität auszeichnen soll. Darüber hinaus ist es Aufgabe der vorliegenden Erfindung, ein Verfahren zur einfachen und kostengünstigen Fertigung einer Platte der vorgenannten Art zur Verfügung zu stellen.

Die vorgenannten Aufgaben werden durch eine Platte mit den Merkmalen von Patentanspruch 1 und durch ein Verfahren mit den Merkmalen von Patentanspruch 12 gelöst. Die in den Unteransprüchen genannten Merkmale betreffen bevorzugte Weiterbildungen der erfindungsgemäßen Aufgabenlösung.

Erfindungsgemäß ist die Nutzschicht als textile Nutzschicht mit einem mehrschichtigen Aufbau ausgebildet und wird als vorgefertigte, einteilige Schichtkomponente auf dem Plattengrundkörper befestigt. Erfindungsgemäß weist die textile Nutzschicht ein oberseitiges textiles Flächengebilde und eine unterseitige Beschichtung aus einem thermoplastischen Kunststoff auf, wobei die unterseitige Beschichtung unmittelbar mit dem Plattengrundkörper verklebt wird. Da bei der Erfindung eine vorgefertigte, eintellige Schichtkomponente verwendet wird, die als solche mit dem Plattengrundkörper verbunden, nämlich mit diesem verklebt wird, lässt sich die erfindungsgemäße Platte in besonders einfacher Weise herstellen. Zudem weist die Platte einen hoch belastbaren Aufbau auf, wobei ein Ablösen der Nutzschicht auch bei starker Belastung nicht zu befürchten ist. Im einfachsten Fall ergibt sich so ein dreischichtiger Aufbau der erfindungsgemäßen Platte, der gebildet wird durch die oberseitige textile Nutzschicht, eine Klebstoffschicht und den Plattengrundkörper.

Bisherige Platten der in Rede stehenden Art haben klangharte Oberflächen, wie beispielsweise Laminate oder Parkettböden. Die Erfindung schlägt vor, die Oberfläche der Platte durch Verwendung einer textilen Nutzschicht beispielsweise stärker schalldämmend und/oder stärker schallabsorbierend auszubilden, als dies bei den aus dem Stand der Technik bekannten Platten der Fall ist. Durch die textile Nutzschicht kann eine weiche Oberfläche der Platte erzeugt werden, was bei Berührung mit der Hand zu einer angenehmen haptischen Wahrnehmung führt. Zudem kann die textile Nutzschicht der Platte das Erscheinungsbild eines Textilmaterials und damit eine ästhetisch ansprechende Erscheinungsform verleihen. Insbesondere kann die textile Nutzfläche auch als Wärmeisolationsschicht wirken. Handelt es sich bei der Platte beispielsweise um eine Bodenbelagsplatte, kann die textile Nutzfläche dazu beitragen, die Oberfläche der Platte fußwarm auszugestalten. Des Weiteren kann der textilen Nutzschicht die Aufgabe zukommen, ein Raumklima zu verbessern, und/oder die textile Nutzfläche ist diffusionsoffen, aber gleichzeitig vorzugsweise wasserdicht ausgebildet, um das Austrocknen des Plattengrundkörpers bei eventuell in dem Plattengrundkörper enthaltener Feuchtigkeit zu vereinfachen. Bei einer dif fusionsoffenen Ausgestaltung des textilen Flächengebildes wird ein möglichst geringer Widerstand gegen Dampf realisiert. Gleichzeitig wird durch die Wasserdichtigkeit gewährleistet, dass etwaige auf dem textilen Flächengebilde befindliche Flüssigkeit nicht in den Plattengrundkörper eindringt.

Bei der Erfindung weist die textile Nutzschicht ein oberseitiges textiles Flächengebilde und eine unterseitige Beschichtung auf. Damit ist ein zumindest zweischichtiger Schichtaufbau der Nutzschicht gegeben. Da die Nutzschicht als vorgefertigte Einheit bzw. Komponente unterseitig eine Beschichtung aufweist, versteht es sich, dass eine weitere Rückenausrüstung, wie sie beispielsweise bei Tuftingteppichen üblich ist, bei der Erfindung nicht vorgesehen ist. Die Funktion der Rückenausrüstung übernimmt bei der Erfindung der Plattengrundkörper. Durch den Verzicht auf die zusätzliche Rückenausrüstung, die bei Teppichen üblicherweise vorgesehen ist, ergibt sich damit eine Minimierung des Material-und Kosteneinsatzes.

Bei einer bevorzugten Ausführungsform der Erfindung weist die Beschichtung ein Latexmaterial oder ein anderes Material aus der Gruppe der thermoplastischen Kunststoffe, insbesondere auf Basis von Styrol-Butadien und/oder Ethylenvinylacetat auf. Die Beschichtung kann vollständig aus diesem Latexmaterial bestehen oder aber auch funktionale Additive zur Verbesserung verschiedener Eigenschaften, wie beispielsweise der Brandschutz- und/oder Antistatikeigenschaften, aufweisen. So ist beispielsweise Aluminiumhydroxid als Additiv gut geeignet.

Bei Versuchen, die im Zusammenhang mit der vorliegenden Erfindung durchgeführt worden sind, ist festgestellt worden, dass der Auftrag der Beschichtung bzw. die Beschichtung als solche ein Trockengewicht zwischen 100 bis 700 g/m², vorzugsweise zwischen 200 und 600 g/m² , bevorzugt 300 bis 500 g/m² und weiter bevorzugt zwischen 390 und 430 g/m² aufweist. Bei einer besonders bevorzugten Ausführungsform ergibt sich ein Trockengewicht von etwa 410 g/m², was einem Auftrag von etwa 600 g/m² im Nasszustand entsprechen kann.

Die Beschichtung, insbesondere mit dem vorgenannten Trockengewicht, hat mehrere Funktionen. Zum einen bindet die Beschichtung das oberseitige textile Flächengebilde. Die einzelnen Fäden bzw. Fasern des textilen Flächengebildes werden damit in der Nutzschicht bzw. an der Beschichtung gehalten, so dass sich eine einstückige Komponente ergibt. Weiterhin wird durch die Beschichtung gewährleistet, dass eine gute Schnittfestigkeit der Kante erreicht wird. Dies spielt sowohl bei der Herstellung aber auch bei der Verlegung und Nutzung der erfindungsgemäßen Platte eine große Rolle. Darüber hinaus kann sich durch die Beschichtung eine Dämm- und/oder Isolationsschicht insbesondere als wasserdichte Isolationsschicht ergeben. Schließlich ist festgestellt worden, die Unterseite der Beschichtung, insbesondere wenn sie aus einem Latexmaterial besteht, sich sehr gut mit der Trägerplatte bzw. dem Plattengrundkörper verkleben lässt.

Im Zusammenhang mit der vorliegenden Erfindung ist festgestellt worden, dass sich ein sehr einfacher und damit kostengünstiger Aufbau der vorgefertigten Baueinheit der Schichtkomponente "Nutzschicht" dann ergibt, wenn die textile Nutzschicht zweischichtig oder aber dreischichtig ausgebildet ist. Es versteht sich, dass grundsätzlich auch eine größere Anzahl von Schichten möglich sein kann, dass aber - je nach Herstellung der textilen Nutzschicht -der zwei- oder aber dreischichtige Schichtaufbau letztlich am günstigen ist. Bei beiden Varianten ist dabei das textile Flächengebilde oberseitig und die Beschichtung unterseitig vorgesehen.

Vorzugsweise erfüllt das textile Flächengebilde die Anforderungen an Fußbodenbeläge nach DIN EN 1307, insbesondere die Anforderungen an Trittschallschutz (DIN EN ISO 140-8), Schallabsorption (DIN EN 20 354) und/oder Wärmedurchlasswiderstand (ISO 8302). Außerdem kann das textile Flächengebilde bei der erfindungsgemäßen Platte eine Imprägnierungsfunktion erfüllen und/oder sich durch eine bestimmte Feuerfestigkeit auszeichnen und damit eine Brandschutzfunktion erfüllen. Durch Verwendung von bestimmten textilen Materialien lassen sich darüber hinaus schadstoffabsorbierende bzw. -verringernde Wirkungen der Nutzschicht erreichen.

Bei einem "textilen Flächengebilde" im Sinne der Erfindung kann es sich um einen Faserverbund aus Faserstoffen handeln, wobei die Faserstoffe ausgewählt sein können aus der Gruppe der Pflanzenfasern, wie Kokos-, Sisal-, Jute-, Baumwoll- oder Hanffasern oder dergleichen, und/oder aus der Gruppe der tierischen Fasern, wie Schafwolle, Ziegenhaar oder Seide, und/oder aus der Gruppe der synthetischen Fasern, wie Polyacryl-, Polyamid-, Polyester- oder Polypropylenfasern, oder Mischungen der vorgenannten Gruppen. Es versteht sich, dass die vorgenannte Aufzählung von möglichen Faserstoffen nicht abschließend ist und dem Fachmann weitere Faserstoffe bekannt sind, die grundsätzlich einen Faserverbund bilden können.

Der Faserverbund kann auch aus wenigstens zwei unterschiedlichen Faserstof fen bestehen. Hierdurch können dem textilen Flächengebilde unterschiedliche Eigenschaften verliehen werden, die auf die jeweils eingesetzten Faserarten zurückzuführen sind, wie insbesondere schalldämmende, schallabsorbierende, wärmeisolierende oder auch eine bestimmte haptische Wahrnehmung des textilen Flächengebildes gewährleistende Eigenschaften. So können beispielsweise Fasern in das textile Flächengebilde eingebunden sein, die schadstoffabsorbierend oder -adsorbierend sind, um bei Verwendung der Platte in Innenräumen ein gesundes Raumklima zu schaffen.

Vorzugsweise handelt es sich bei dem textilen Flächengebilde um ein Gewebe, Gewirke oder Gestricke. Grundsätzlich kann die Textilschicht auch geknüpft oder getuftet sein. Besonders bevorzugt ist die Textilschicht ausgebildet als Teppichmaterial, nämlich als gewebter oder geknüpfter Teppich oder als Teppichbodenmaterial. Ein Teppichboden kann durch verschiedene Verfahren hergestellt werden, wie Beflocken, Klebepol-Verfahren, Nadeln, Tuften, Weben oder Wirken, wobei verschiedene Fasermaterialien zum Einsatz kommen können. Beispielsweise kann ein Velourteppich oder ein Schlingenteppich das textile Flächengebilde bilden. Auch Polstertextilien und Bezugsstoffe, die üblicherweise im Möbelbau zum Einsatz kommen, sind grundsätzlich zur Verwendung als textiles Flächengebilde im Sinne der Erfindung geeignet und vorteilhaft.

Darüber hinaus kann als textiles Flächengebilde ein Vliesstoff, Filz, Walkstoff oder Mikrofaserstoff, wie Alcantara, nämlich ein auf Polyester und Polyurethan basierender Mikrofaserstoff, vorgesehen sein. Aus der Gruppe der Vliesstoffe können Kunstfaservliese, die chemische Fasern aus natürlichen oder synthetischen Polymeren, wie beispielsweise Polyamid (PA), Polyethylen (PE), Polyvinylchlorid (PVC), Polyester, insbesondere Polyethylenter-ephthalat (PET), aufweisen, und/oder Naturfaservliese, die tierische Fasern, wie Seide oder Wolle, insbesondere Ziegen- oder Schafswolle, oder pflanzliche Fasern, wie Hanf oder Baumwolle oder Seide, aufweisen, und/oder Mineralfaservliese, die mineralische Fasern, wie beispielsweise Glas, Asbest, Mineralwolle oder Basalt, auf weisen, vorteilhaft eingesetzt werden. Zur Fasergewinnung können Spinnverfahren, wie Trockenspinnen, Nassspinnen, Schmelzspinnen oder Matrixspinnen, zur Anwendung kommen. Die Verfestigung kann mechanisch, durch Vernadeln oder durch Wasserstrahlverfestigung, oder chemisch, durch die Zugabe von Bindemitteln, wie wasserbasierten Acrylatharzen oder Reaktivharzen, wie beispielsweise Phenol- oder Harnstoffharzen, oder Epox- oder Polyurethanbindemitteln, oder auch thermisch, durch das Erweichen in einem geeigneten Gasstrom, zwischen beheizten Walzen oder auch in einem Dampfstrom, erfolgen. Bei chemischen Verfestigungsverfahren kann durch das Bindemittel eine Verbesserung der mechanischen Eigenschaften des Textilmaterials erreicht werden, wie beispielsweise eine höhere Festigkeit und eine geringere Abriebsneigung. Durch zusätzliche Imprägnierungen können die Gebrauchseigenschaften verbessert werden. Beispielsweise lassen sich durch eine geeignete Imprägnierung die Schmutzempfindlichkeit des Textilmaterials senken und eine leichte Reinigbarkeit bei geringen Pflegeanforderungen erzielen. Auch ein UV-Schutz ist durch eine zusätzliche Imprägnierung möglich.

Als Alternative zu herkömmlichen formaldehyd-basierten Reaktivharzen wie Phenol- oder Harnstoff-Formaldehydharzen oder als Alternative zu Epox- oder Polyurethanbindemitteln können rein wasser-basierte und formaldehydfreie Acrylatharze, wie ein unter dem Handelsnamen Acrodur^{®} von der Firma BASF vertriebenes Bindemittel, eingesetzt werden, insbesondere für die Herstellung eines Vliesstoffes aus natürlichen Fasern.

Bei einer bevorzugten Ausführungsform des zweischichtigen Aufbaus der Nutzschicht ist vorgesehen, dass ein im Webverfahren hergestelltes Gewebe als oberseitiges textiles Flächengebilde vorgesehen ist, an dem unterseitig die Beschichtung vorgesehen ist. Bei dieser Ausführungsform weist das Gewebe bevorzugt eine Dicke zwischen 1 bis 10 mm, weiter bevorzugt zwischen 1,5 bis 8 mm und insbesondere zwischen 2 bis 6 mm auf.

Bei der dreischichtigen Alternative der vorgefertigten Nutzschicht sind als oberseitiges textiles Flächengebildet Polfäden in Form von Schlingen oder Velours vorgesehen. Der Pol kann dabei also in zwei Ausführungen hergestellt sein, entweder als Schlingenpol (Loop Pile) oder als Schnittpol (Cut Pile), auch als Velours bezeichnet. Die Polfäden sind dabei in eine Trägermaterialschicht, die die zweite Schicht bildet, eingenäht. Unterseitig ist an der Trägermaterialschicht die vorgenannte Beschichtung als dritte Schicht vorgesehen. Bei dieser Ausführungsform weisen die insbesondere aus Polyamid bestehenden Polfäden ein Gewicht zwischen 380 bis 1500 g/m², bevorzugt zwischen 420 und 650 g/m² auf. Die Polhöhe liegt zwischen 1 bis 6 mm , bevorzugt zwischen 2,5 bis 5 mm, so dass ein hinreichend guter Teppicheindruck entsteht.

Bei dem Trägermaterial handelt es sich bevorzugt um ein Vlies, vorzugsweise aus einem thermoplastischen Kunststoff, insbesondere Polyethersulfon. Die Trägermaterialschicht sollte bevorzugt ein Gewicht zwischen 70 bis 150 g/m² und insbesondere zwischen 100 bis 120 g/m aufweisen.

Die textile Nutzschicht wird bei dem erfindungsgemäßen Verfahren als vorgefertigtes und damit einstückiges Schichtmaterial auf den Plattengrundkörper aufgebracht, insbesondere aufkaschiert, was eine einfache und kostengünstige Fertigung der erfindungsgemäßen Platte zulässt. Die textile Nutzschicht kann beispielsweise in Form von Bahnen- oder Rollenware als Ausgangsmaterial für den Herstellungsprozess der Platte zur Verfügung gestellt werden. Insbesondere kann in diesem Zusammenhang die textile Nutzschicht ein Teppichbodenmaterial in Art eines Vorproduktes der Teppichherstellung sein, bei dem auf die übliche Rückenausrüstung, wie sie beispielsweise bei Tuftingteppichen üblich ist, verzichtet worden ist, da der Plattengrundkörper diese Funktion übernimmt.

Bevorzugt ist an der Unterseite des Plattenkörpers ein Gegenzug vorgesehen, um einen Verzug des Plattengrundkörpers durch etwaig auftretende Spannungen zu vermeiden.

Das textile Flächengebilde als Teil der textilen Nutzschicht kann bevorzugt eine Schichtdicke zwischen 0,2 bis 8 mm, vorzugsweise zwischen 1 bis 7 mm auf weisen. Bei der zweischichtigen Alternative, bei der ein Webteppich eingesetzt wird, liegt die Schichtdicke des textilen Flächengebildes vorzugsweise zwischen 2 bis 6 mm, während bei der dreischichtigen Alternative, bei der das oberseitige textile Flächengebilde durch Polfäden gebildet wird, die Schichtdicke bevorzugt zwischen 2,5 bis 5 mm liegt. Der Plattengrundkörper kann eine Dicke von 5 bis 20 mm, vorzugsweise 6 bis 10 mm, insbesondere von etwa 8 mm, aufweisen. Es versteht sich, dass die erforderliche Dicke des Plattengrundkörpers von der mechanischen Belastung der erfindungsgemäßen Platte abhängt.

Wie bereits oben beschrieben, kann die Nutzschicht auf der Außenseite geprägt sein, d. h. vertiefte Strukturen aufweisen, was es ermöglicht, der Platte das natürliche Aussehen von bestimmten Rohstoffen, wie Holz oder Kork, zu verleihen.

Um erfindungsgemäße Platten miteinander verbinden zu können, kann der Plattengrundkörper eine Verriegelungskontur, insbesondere eine Nut- oder Federkontur zur Ausbildung einer Nut- und Federverbindung oder eine Rastkontur zur Ausbildung einer Rastverbindung mit einem benachbarten komplementären Plattengrundkörper, aufweisen. Geeignete Verriegelungsmittel, beispielsweise zur Ausbildung einer Klickverbindung an den Kanten des Plattengrundkörpers, ermöglichen bei geringem Zeitaufwand das einfache Verbinden von einzelnen erfindungsgemäßen Platten. Ein Erfindungsaspekt betrifft in diesem Zusammenhang eine erfindungsgemäße Platte mit einem Plattengrundkörper, der mit einer textilen Nutzschicht in Form eines Teppichbodenmaterials versehen ist und an seinen Rändern Verriegelungsmittel, insbesondere solche, die zur Ausbildung einer Klickverbindung geeignet sind, aufweist. Solche Platten können als Bodenbelagsplatten zum Einsatz kommen und sind im Vergleich zu als Rollen- oder Bahnenware zu verlegenden Teppichböden einfacher zu handhaben und zu verlegen. Diesem vorgenannten Aspekt der Erfindung kann eigenerfinderische Bedeutung zukommen.

Der Plattenwerkstoff des Plattengrundkörpers kann ausgewählt sein aus der Gruppe der Holzwerkstoffe, insbesondere auf Vollholz- oder Furnierholzbasis, der Holzspanwerkstoffe, der Holzfaserwerkstoffe und/oder der Verbundwerkstof fe auf Holz-, Kunststoff-, Zellstoff- und/oder Mineralstoffbasis, und/oder aus der Gruppe der Kunststoffe und/oder aus der Gruppe der Mineralstoffe und/oder aus der Gruppe der lignin- und/oder zellulosebasierten Werkstoffe und/oder aus der Gruppe der keramischen Werkstoffe und/oder deren Mischungen. Zusätzlich können Bindemittel und Zusatzstoffe vorgesehen sein, um dem Plattenwerkstoff die gewünschten Eigenschaften zu verleihen. Besonders bevorzugt handelt es sich bei dem Plattengrundkörper um eine HDF- oder MDF-Platte, was der Platte eine hohe Festigkeit und Steifigkeit verleiht und eine kostengünstige Herstellung zulässt. Bei einer anderen Alternative besteht der Plattengrundkörper aus Kunststoff oder Kunststoff/Holzfasermischungen (WPC - Wood Plastic Composite). Ebenso sind Plattenmaterialien auf mineralischer Basis oder Zement oder Gipsbasis möglich.

Im Einzelnen gibt es eine Vielzahl von Möglichkeiten, die erfindungsgemäße Platte oder das erfindungsgemäße Verfahren auszugestalten und weiterzubilden, wobei einerseits auf die abhängigen Patentansprüche und andererseits auf die nachfolgende Beschreibung bevorzugter Ausführungsbeispiele der Erfindung unter Bezugnahme auf die Zeichnung verwiesen wird. Im Übrigen lässt es die Erfindung bedarfsweise zu, die in den Ansprüchen genannten und/oder die anhand der Zeichnung offenbarten und beschriebenen Merkmale miteinander zu kombinieren, auch wenn dies nicht im Einzelnen beschrieben ist. Die vorstehenden Werteangaben und angegebenen Intervalle erfassen jeweils sämtliche Werte und Zwischenintervalle, also nicht nur die Untergrenzen bzw. bei Intervallen die Intervallgrenzen, ohne dass dies einer ausdrücklichen Erwähnung bedarf.

In der Zeichnung zeigen:
- Fig. 1: eine schematische Längsschnittansicht des Schichtenaufbaus einer ersten Ausführungsform einer erfindungsgemäßen Platte in Explosionsdarstellung,
- Fig. 2: eine schematische Längsschnittansicht des Schichtaufbaus einer zweiten Ausführungsform einer erfindungsgemäßen Platte in Explosionsdarstellung und
- Fig. 3: die in Fig. 2 gezeigte Platte in einer Ansicht von oben.

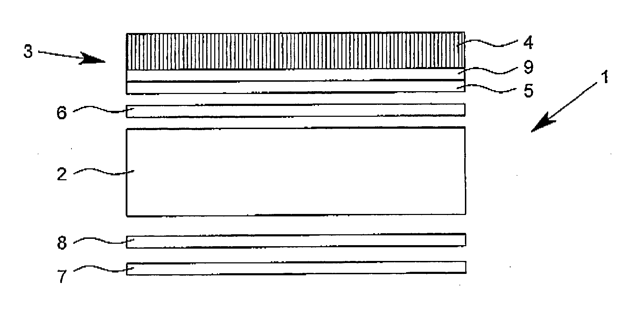

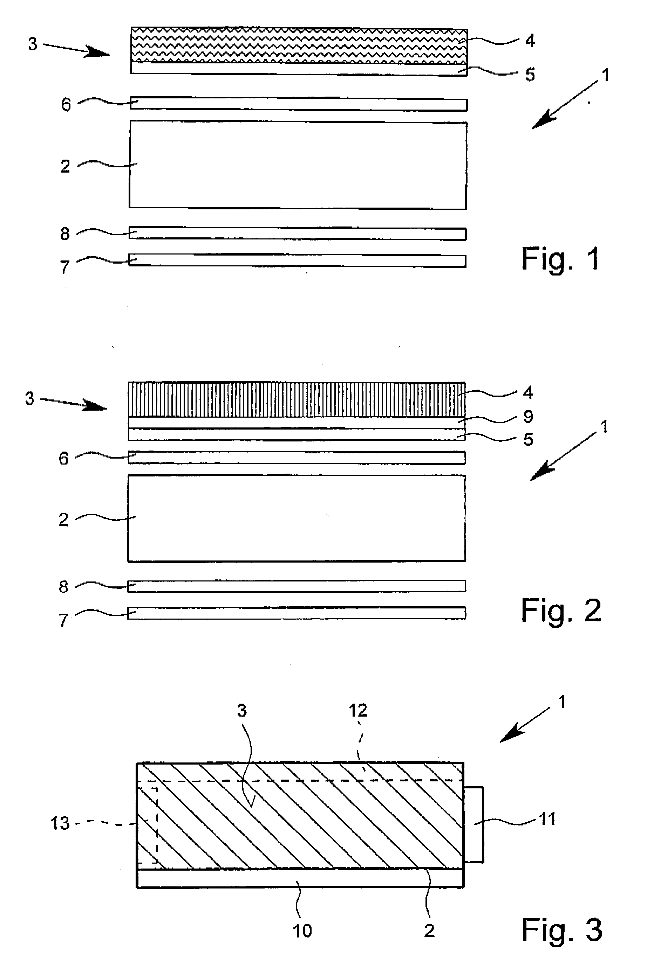

In Fig. 1 ist schematisch der Schichtaufbau einer Platte 1 dargestellt, bei der es sich beispielsweise um eine Bodenbelags-, Wand- oder Deckenverkleidungsplatte handeln kann. Insbesondere handelt es sich bei der Platte 1 um ein Paneelelement.

Die Platte 1 weist einen Plattengrundkörper 2 und eine auf dem Plattengrundkörper 2 aufgebrachte, obere textile Nutzschicht 3 auf. Die textile Nutzschicht 3 ist bei den beiden in den Fig. 1 und 2 dargestellten Ausführungsformen jeweils mehrschichtig ausgebildet. Dabei ist bei der in Fig. 1 dargestellten Ausführungsform ein zweischichtiger und bei der in Fig. 2 dargestellten Ausführungsform ein dreischichtiger Schichtaufbau vorgesehen. Wichtig ist, dass es sich bei der textilen Nutzschicht 3 um eine nach ihrer Herstellung einstückige Komponente handelt, die als einstückige Einheit verarbeitet wird. Bei der Verbindung der textilen Nutzschicht 3 werden also nicht die einzelnen Schichten der Nutzschicht 3 mit dem Plattengrundkörper 2 verbunden, sondern die textile Nutzschicht 3 wird als vorgefertigte einstückige Schichtkomponente mit dem Plattengrundkörper 2 verbunden.

Bei beiden Ausführungsformen weist die textile Nutzschicht 3 ein oberseitiges textiles Flächengebilde 4 und eine unterseitige Beschichtung 5 auf. Bei beiden Ausführungsformen weist die Beschichtung 5 ein Latexmaterial auf. Hierbei handelt es sich bei der Ausführungsform gemäß Fig. 1 um Ethylenvinylacetat, während bei der Ausführungsform gemäß Fig. 2 ein Latexmaterial auf Basis von Styrol-Butadien vorgesehen ist. Es versteht sich, dass die vorgenannten Materialen auch umgekehrt, also bei der jeweils anderen Ausführungsform realisiert sein können. Darüber hinaus können auch andere Latexmaterialien vorgesehen sein. Des Weiteren ist bei der Ausführungsform gemäß Fig. 2 ein Additiv in Form von Aluminiumhydroxid vorgesehen, während dies bei der Ausführungsform gemäß Fig. 1 fehlt. Stattdessen können dort andere oder zusätzliche funktionale Additive zur Beeinflussung verschiedener Eigenschaften der Platte bzw. der textilen Nutzschicht 3 vorgesehen sein.

Die Befestigung der textilen Nutzschicht 3 am Plattengrundkörper 2 erfolgt bei beiden Ausführungsformen über eine Klebschicht 6.

Unterseitig weist die Platte 1 jeweils einen Gegenzug 7 auf, der zum Beispiel aus Kork, einem Vlies oder Filz besteht. Der Gegenzug, der eine Dicke zwischen 1 bis 2 mm aufweist, ist ebenfalls über eine Klebschicht 8 mit der Unterseite des Plattengrundkörpers 2 verbunden.

Bei der in Fig. 1 dargestellten Ausführungsform ist es so, dass die textile Nutzschicht 3 im Webverfahren hergestellt worden ist. Die Verfestigung des Gewebes als textiles Flächengebilde 4 erfolgt durch die Beschichtung 5. Die Grammatur des Beschichtungsauftrages liegt dabei vorzugsweise zwischen 300 bis 600 g/m².

Bei der in Fig. 2 dargestellten Ausführungsform befindet sich zwischen dem textilen Flächengewebe 4 und der Beschichtung 5 eine Trägermaterialschicht 9. Die textile Nutzschicht 3 selbst ist mit ihren drei Schichten beim dargestellten Ausführungsbeispiel im Tuftingverfahren hergestellt worden. Dabei sind die Polfäden, die sich außenseitig befinden und das textile Flächengebilde 4 bilden, in die Trägermaterialschicht 9 eingenäht worden. Das Polgarn besteht bevorzugt aus Polyamid und hat ein Poleinsatzgewicht zwischen 420 bis 650 g/m². Der Pol kann dabei in zwei Ausführungen hergestellt werden, nämlich zum einen als Schlingenpol und zum anderen als Schnittpol. Die Polhöhe, also die Höhe des textilen Flächengewebes 4 gerechnet von der Trägermaterialschicht 9, liegt zwischen 2,5 bis 5 mm. Das Trägermaterial besteht vorliegend aus einem PES-Vlies mit einem Gewicht zwischen 100 bis 120 g/m². Die an der Unterseite der Trägermaterialschicht 9 vorgesehene Beschichtung 5 dient unter anderem zur Verfestigung der Polfäden. Bei der vorliegenden Ausführungsform wird zur Beschichtung auf Latexmaterial auf Basis von Styrol-Butadien zurückgegriffen. Die Beschichtung verbindet die Polfäden mit der Trägermaterialschicht 9 zu einer stabilen, abrissfesten Schicht, wobei gleichzeitig eine Schnittfestigkeit im Bereich der Kanten erreicht wird. Der Auftrag des Latexmaterials beträgt etwa 410 g/m², was im Nasszustand vorliegend etwa 600 g/m² entspricht.

Das Besondere bei der Ausführungsform gemäß Fig. 2 besteht darin, dass sich an die unterseitige Beschichtung 5 der textilen Nutzschicht 3 keine weitere Rückenausrüstung, wie sie beispielsweise bei Tuftingteppichen üblich ist, auf weist. Die Funktion der Rückenausrüstung bei Teppichen übernimmt im vorliegenden Fall der Plattengrundkörper. Dieser besteht bei den dargestellten Ausführungsbeispielen aus einer HDF-Trägerplatte mit einer Dicke zwischen 6 bis 9 mm. Auch eine MDF-Platte oder aber eine Platte aus Kunststoff oder einem Kunststoff-Holzfasergemisch ist möglich.

Fig. 3 zeigt eine Platte 1 in einer schematischen Ansicht von oben. Die Platte 1 weist an den Außenrändern Federn 10, 11 und dazu korrespondierende Nuten 12, 13 als Verriegelungsmittel auf, die es ermöglichen, mehrere Platten 1 an den Längs- und Querrändern miteinander zu einem Bodenbelag zu verbinden. Insbesondere können die Verriegelungsmittel zur Ausbildung einer Klickverbindung ausgebildet sein. Die Nutzschicht 3 deckt den Plattengrundkörper 2 auf der sichtbaren Oberseite der Platte 1 vollflächig ab. Die Federn 10, 11 sind jedoch vorzugsweise nicht von der Nutzschicht 3 bedeckt, so dass sich eine Verbindung zwischen benachbarten Platten 1 leicht herstellen lässt.

Vorteilhaft ist es, wenn die Nutzschicht 3 an den Rändern derart ausgestaltet ist, dass der Übergang zwischen zwei Nutzschichten 3 im Plattenverbund benachbarter und miteinander verbundener Platten 1 von einem Betrachter nicht wahrgenommen wird. Dies kann beispielsweise durch eine höhere Faserdichte, - dicke und/oder -länge im Bereich der Ränder der Nutzschicht 3 und/oder durch über die Ränder des Plattenkörpers 2 überstehende Fasern der Nutzschicht 3 erreicht werden.

Die Herstellung der in Fig. 3 gezeigten Platte 1 kann auf unterschiedliche Weise erfolgen. Zum einen ist es möglich, dass zunächst ein großflächiges Plattenmaterial vollflächig mit der Nutzschicht 3 verbunden wird. Das Plattenmaterial kann ein übliches Pressenmaß von beispielsweise 2,0 m Breite und 5,2 m Länge oder von 1,3 m Breite und 4,8 m Länge aufweisen. Vor dem Ausschneiden der Platten 5 aus dem Plattenmaterial wird dieses oberflächenfertig hergestellt, was beispielsweise die Reinigung der Oberfläche des Plattenmaterials von überschüssigen Fasern beinhalten kann. Nach dem Ausschneiden der Platten 1 können dann die Verriegelungskonturen nachträglich an den Platten 1 erzeugt werden.

Insbesondere ist sicherzustellen, dass die Nutzschicht 3 an den Längs- und Querrändern der Platte 1 nicht ausfasert, sofern die Verriegelungskonturen nach dem Aufbringen der Textilschicht auf den Plattengrundkörper 2 erzeugt werden müssen.

Ein alternativer Weg zur Herstellung einer Platte 1 kann daher vorsehen, dass zunächst der Plattengrundkörper 2 mit den Verriegelungskonturen hergestellt und anschließend mit einer Nutzschicht versehen wird. Die Ausbildung exakter Übergänge zwischen der Nutzschicht 3 und den randseitigen Verriegelungskonturen lässt sich so in einfacher Weise sicherstellen.

### Bezugszeichenliste

- 1: Platte
- 2: Plattengrundkörper
- 3: Nutzschicht
- 4: textiles Flächengebilde
- 5: Beschichtung
- 6: Klebschicht
- 7: Gegenzug
- 8: Klebschicht
- 9: Trägermaterialschicht
- 10: Feder
- 11: Feder
- 12: Nut
- 13: Nut

## Patentansprüche

1. Platte (1, 5), wie Bodenbelags-, Wand- oder Deckenverkleidungsplatte und/oder Möbelbauteil-, Gehäuse-, Abdeck- oder Trockenausbauplatte, und/oder als Fassaden-, Paneel- oder Dielenelement, Sichtblende oder dergleichen, mit einem Plattengrundkörper (2) und wenigstens einer auf den Plattengrundkörper (2) aufgebrachten Nutzschicht (3), **dadurch gekennzeichnet, dass** die Nutzschicht (3) als textile Nutzschicht (3) mit einem mehrschichtigen Aufbau ausgebildet und als vorgefertigte, einteilige Schichtkomponente auf dem Plattengrundkörper (2) befestigt ist, wobei die textile Nutzschicht (3) ein oberseitiges textiles Flächengebilde (4) und eine unterseitige Beschichtung (5) aus einem thermoplastischen Kunststoff aufweist und wobei die unterseitige Beschichtung (5) unmittelbar über eine Klebschicht (6) mit dem Plattengrundkörper (2) verklebt ist.

2. Platte nach Anspruch 1, **dadurch gekennzeichnet, dass** die Beschichtung (5) ein Latexmaterial, bevorzugt auf Basis von Styrol-Butadien und/oder Ethylenvinylacetat, aufweist und/oder daraus besteht.

3. Platte nach einem der vorhergehenden Ansprüche 1 oder 2, **dadurch gekennzeichnet, dass** die Beschichtung (5) funktionale Additive zur Verbesserung der Brandschutz- und/oder Antistatikeigenschaften aufweist.

4. Platte nach einem der vorhergehenden Ansprüche, **dadurch gekennzeichnet, dass** der Auftrag der Beschichtung (5) ein Trockengewicht zwischen 100 und 700 g/m² aufweist.

5. Platte nach einem der vorhergehenden Ansprüche, **dadurch gekennzeichnet, dass** die textile Nutzschicht (3) zweischichtig ausgebildet ist und ein im Webverfahren hergestelltes Gewebe als oberseitiges textiles Flächengebilde (4) auf weist, an dem unterseitig die Beschichtung (5) vorgesehen ist.

6. Platte nach Anspruch 5, **dadurch gekennzeichnet, dass** das Gewebe eine Dicke zwischen 1 bis 10 mm aufweist.

7. Platte nach einem der Ansprüche 1 bis 4, **dadurch gekennzeichnet, dass** die textile Nutzschicht (3) dreischichtig ausgebildet ist, dass Polfäden in Form von Schlingen oder Velour als oberseitiges textiles Flächengebilde (4) vorgesehen sind, dass die Polfäden in eine Trägermaterialschicht (9) eingenäht und/oder an der Trägermaterialschicht gehalten sind und dass unterseitig an der Trägermaterialschicht (9) die Beschichtung (5) vorgesehen ist.

8. Platte nach Anspruch 7, **dadurch gekennzeichnet, dass** die Polfäden ein Gewicht zwischen 380 bis 1500 g/m² aufweisen.

9. Platte nach Anspruch 7 oder 8, **dadurch gekennzeichnet, dass** die Polhöhe zwischen 2,5 bis 5 mm beträgt.

10. Platte nach einem der vorhergehenden Ansprüche 7 bis 9, **dadurch gekennzeichnet, dass** die Trägermaterialschicht (9) als Vlies ausgebildet ist und/oder aus einem thermoplastischen Kunststoff besteht.

11. Platte nach einem der vorhergehenden Ansprüche 7 bis 10, **dadurch gekennzeichnet, dass** die Trägermaterialschicht (9) ein Gewicht zwischen 70 bis 150 g/m² aufweist.

12. Verfahren zur Herstellung einer Platte (1, 5), wie Bodenbelags-, Wand- oder Deckenverkleidungsplatte und/oder Möbelbauteil-, Gehäuse-, Abdeck- oder Trockenausbauplatte, und/oder als Fassaden-, Paneel- oder Dielenelement, Sichtblende oder dergleichen, mit einem Plattengrundkörper (2) und wenigstens einer auf den Plattengrundkörper (2) aufgebrachten Nutzschicht (3), wobei die Nutzschicht (3) als textile Nutzschicht (3) mit einem mehrschichtigen Aufbau ausgebildet ist und als vorgefertigte, einteilige Schichtkomponente auf dem Plattengrundkörper befestigt ist, wobei die textile Nutzschicht (3) ein oberseitiges textiles Flächengebilde (4) und eine unterseitige Beschichtung (5) aus einem thermoplastischen Kunststoff aufweist und wobei die Nutzschicht (3) mit der unterseitigen Beschichtung (5) unmittelbar über eine Klebschicht (6) mit dem Plattengrundkörper (2) verklebt wird.

13. Verfahren nach Anspruch 12, **dadurch gekennzeichnet, dass** die textile Nutzschicht (3) in Form von Bahnen- oder Rollenware vorliegt und auf ein Plattenmaterial aufgeklebt wird und dass anschließend aus dem Plattenmaterial der Plattengrundkörper ausgeschnitten wird.
